# EUROPÄISCHE PATENTSCHRIFT

(11) **EP 2 794 372 B1**
(45) Veröffentlichungstag und Bekanntmachung des Hinweises auf die Patenterteilung: **10.10.2018**
(21) Anmeldenummer: 12778312.4
(22) Anmeldetag: 22.10.2012
(51) Int. Cl.: B60T 11/16

(54) **HAUPTBREMSZYLINDER FÜR EIN BREMSSYSTEM EINES FAHRZEUGS UND VERFAHREN ZUM BETREIBEN EINES BREMSSYSTEMS MIT EINEM HAUPTBREMSZYLINDER**
MAIN BRAKE CYLINDER FOR A BRAKE SYSTEM OF A VEHICLE AND METHOD FOR OPERATING A BRAKE SYSTEM HAVING A MAIN BRAKE CYLINDER
MAÎTRE-CYLINDRE DE FREIN POUR UN SYSTÈME DE FREINAGE D'UN VÉHICULE ET PROCÉDÉ POUR FAIRE FONCTIONNER UN SYSTÈME DE FREINAGE AVEC UN MAÎTRE-CYLINDRE DE FREIN

(30) Priorität: 20.12.2011 DE 102011089161
(43) Veröffentlichungstag der Anmeldung: 29.10.2014
(73) Patentinhaber: Robert Bosch GmbH, 70442 Stuttgart (DE)
(72) Erfinder: STRENGERT, Stefan, 70469 Stuttgart (DE); KUNZ, Michael, 71711 Steinheim an der Murr (DE)
(86) Internationale Anmeldenummer: PCT/EP2012/070854
(87) Internationale Veröffentlichungsnummer: WO 2013/091929

(56) Entgegenhaltungen:
- US-A- 3 162 018

## Beschreibung

Die Erfindung betrifft einen Hauptbremszylinder für ein Bremssystem eines Fahrzeugs. Des Weiteren betrifft die Erfindung ein Verfahren zum Betreiben eines Bremssystems mit einem Hauptbremszylinders.

### Stand der Technik

In der DE 10 2009 028 034 A1 ist ein hydraulischer Hauptbremszylinder beschrieben, dessen erste Druckkammer und dessen zweite Druckkammer jeweils eine als Schnüffelbohrung ausgebildete Reservoiranbindungsöffnung aufweist. Ein rohrförmiger, außenliegender Druckstangenkolben ist so an dem Hauptbremszylinder angeordnet, dass die Reservoiranbindungsöffnung der ersten Druckkammer mittels des um zumindest einen ersten Abdichtweg aus seiner Ausgangsstellung verstellten rohrförmigen Druckstangenkolbens abdichtbar ist. Außerdem weist der Hauptbremszylinder noch einen weiteren Druckstangenkolben und einen Schwimmkolben auf.

US 3 162 018 A offenbart einen Hauptbremszylinder für ein Bremssystem eines Fahrzeugs mit zumindest einer ersten Druckkammer, an welcher mindestens eine erste Reservoiranbindungsöffnung ausgebildet ist, einem ersten Kolbenbauteil und einem zweiten Kolbenbauteil, wobei die mindestens eine erste Reservoiranbindungsöffnung der ersten Druckkammer mittels des um zumindest um einen ersten Mindest-Abdichtweg aus seiner ersten Ausgangsstellung verstellten ersten Kolbenbauteils abdichtbar ist wobei die mindestens eine erste Reservoiranbindungsöffnung der ersten Druckkammer zusätzlich mittels des um zumindest um einen zweiten Mindest-Abdichtweg ungleich dem ersten Mindest-Abdichtweg aus seiner zweiten Ausgangsstellung verstellten zweiten Kolbenbauteils abdichtbar ist.

### Offenbarung der Erfindung

Die Erfindung schafft einen Hauptbremszylinder für ein Bremssystem eines Fahrzeugs mit den Merkmalen des Anspruchs 1, ein Bremssystem mit den Merkmalen des Anspruchs 5, und ein Verfahren zum Betreiben eines Bremssystems mit einem Hauptbremszylinder mit den Merkmalen des Anspruchs 7.

### Vorteile der Erfindung

Durch die vorteilhafte Abdichtbarkeit der mindestens einen ersten Reservoiranbindungsöffnung wahlweise entweder mittels des zumindest um den ersten Mindest-Abdichtweg aus seiner ersten Ausgangsstellung verstellten ersten Kolbenbauteils oder mittels des zumindest um den zweiten Mindest-Abdichtweg aus seiner zweiten Ausgangsstellung verstellten zweiten Kolbenbauteils ist ein Leerweg der ersten Druckkammer variierbar. Unter dem variierbaren Leerweg kann ein Betätigungsweg eines Bremsbetätigungselements verstanden werden, welcher mittels einer Betätigung des Bremsbetätigungselements zu überbrücken ist, bevor ein möglicher Bremsflüssigkeitstransfer zwischen einem an mindestens einer ersten Reservoiranbindungsöffnung angebundenen Bremsflüssigkeitsreservoir und der ersten Druckkammer unterbunden ist und somit ein Bremsdruckaufbau mittels einer weiteren Betätigung des Bremsbetätigungselements bewirkbar ist. Das wahlweise Festlegen des Leerwegs entweder auf einen dem ersten Mindest-Abdichtweg entsprechenden ersten Wert oder auf einen dem zweiten Mindest-Abdichtweg entsprechenden zweiten Weg ist auf einfache Weise realisierbar. Die vorliegende Erfindung ermöglicht somit ein Festlegen des Leerwegs wahlweise auf einen bezüglich eines Funktionszustands des Bremssystems und/oder einer Fahrsituation bevorzugten Werts.

Wie nachfolgend genauer beschrieben wird, kann auf diese Weise insbesondere der Leerweg so festgelegt werden, dass ein häufiges Einsetzen eines Generators für ein rekuperatives Bremsen zum schnellen Aufladen einer Fahrzeugbatterie möglich ist. Ebenso kann bei einem Auftreten einer Funktionsbeeinträchtigung an dem Generator und/oder an einer Komponente des Bremssystems der Leerweg so festgelegt werden, dass der Fahrer schnell direkt in die Radbremszylinder des Bremssystems einbremsen kann.

Beispielsweise kann der erste Mindest-Abdichtweg größer als der zweite Mindest-Abdichtweg sein. In einem Aktivbetrieb des Bremssystems, d.h. bei voller Einsetzbarkeit des Generators und weiterer der Komponenten des Bremssystems, kann somit der Leerweg auf einen zu dem ersten Mindest-Abdichtweg korrespondierenden ersten Wert gesteigert werden. Auf diese Weise ist gewährleistbar, dass eine Betätigung des Bremsbetätigungselements unter dem vergleichsweise großen ersten Wert nicht zu einer Drucksteigerung in der ersten Druckkammer führt. Die unterbundene direkte Bremswirkung der Fahrerbremskraft während Betätigung des Bremsbetätigungselements unter dem ersten Wert kann zum häufigen Einsetzen des Generators für ein rekuperatives Bremsen genutzt werden. Auf diese Weise ist die Fahrzeugbatterie schnell aufladbar. Ebenso kann in der hydraulischen Rückfallebene, insbesondere bei einer Funktionsbeeinträchtigung des Generators und/oder einer Komponente des Bremssystems, der Leerweg auf einem zu dem zweiten Mindest-Abdichtweg korrespondierenden zweiten Weg reduziert werden. Insbesondere kann auf diese Weise der Leerweg auf ein normales/bekanntes Maß eines (standardgemäßen) Hauptbremszylinders, wie z.B. nahezu auf Null, reduziert werden. Somit muss der Fahrer in der hydraulischen Rückfallebene nicht den vergleichsweise großen ersten Wert des Leerwegs überwinden, bevor er mittels der Fahrerbremskraft direkt einen Druckaufbau in der ersten Druckkammer bewirkt. Dadurch wird verhindert, dass der Fahrer in der Rückfallebene den Eindruck eines "langen Bremspedals" gewinnt.
In einer vorteilhaften Weiterbildung weist der Hauptbremszylinder eine von dem zweiten Kolbenbauteil begrenzte zweite Druckkammer auf, an welcher mindestens eine zweite Reservoiranbindungsöffnung ausgebildet ist, welche mittels des zweiten Kolbenbauteils abdichtbar ist. Die vorliegende Erfindung ist somit auch auf einen als Tandem-Hauptbremszylinder ausgebildeten Hauptbremszylinder anwendbar.
Vorteilhaferweise ist die mindestens eine zweite Reservoiranbindungsöffnung der zweiten Druckkammer mittels des um einen Kolbenweg kleiner als den zweiten Mindest-Abdichtweg aus seiner zweiten Ausgangsstellung verstellten Kolbenbauteils abdichtbar. Wie unten genauer beschrieben wird, ist auf diese Weise ein Hauptbremszylinder realisierbar, bei welchem eine (wahlweise) Verstellbarkeit des zweiten Kolbenbauteils leicht ausbildbar ist.

Vorzugsweise ist der Hauptbremszylinder in einen ersten Betriebsmodus steuerbar, in welchem ein erstes Maximum einer dem Verstellen des ersten Kolbenbauteils entlang des ersten Mindest-Abdichtwegs entgegenwirkenden Gegenkraft kleiner als ein zweites Maximum einer dem Verstellen des zweiten Kolbenbauteils entlang des zweiten Mindest-Abdichtwegs entgegenwirkenden Gegenkraft ist, wobei der Hauptbremszylinder zusätzlich in einen zweiten Betriebsmodus steuerbar ist, welchem das erste Maximum der dem Verstellen des ersten Kolbenbauteils entlang des ersten Mindest-Abdichtwegs entgegenwirkenden Gegenkraft größer oder gleich als das zweite Maximum der dem Verstellen des zweiten Kolbenbauteils entlang des zweiten Mindest-Abdichtwegs entgegenwirkenden Gegenkraft ist. Auf diese Weise ist die (wahlweise) Verstellbarkeit des zweiten Kolbenbauteils bei einer Betätigung des Bremsbetätigungselements, bzw. ein Unterbinden eines (Mit-)Verstellens des zweiten Kolbenbauteils trotz einer Betätigung des Bremsbetätigungselements, auf einfache Weise realisierbar.
Beispielsweise kann eine sich an dem ersten Kolbenbauteil abstützende erste Rückstellfeder in der ersten Druckkammer eine erste Federkonstante aufweisen, während eine sich an dem zweiten Kolbenbauteil abstützende zweite Rückstellfeder in der zweiten Druckkammer eine zweite Federkonstante kleiner als die erste Federkonstante aufweist. Des Weiteren kann eine zusätzlich zu der mindestens einen zweiten Reservoiranbindungsöffnung an der zweiten Druckkammer ausgebildete Bremskreisanbindungsöffnung mittels eines Ventils schließbar sein. Somit ist über ein Schließen des Ventils der Hauptbremszylinder verlässlich in den ersten Betriebsmodus steuerbar, während ein zumindest teilweises Öffnen des Ventils automatisch ein Steuern des Hauptbremszylinders in den zweiten Betriebsmodus bewirkt.

Der in die mindestens zwei Betriebsmoden steuerbare Hauptbremszylinder ist jedoch nicht auf die in den oberen Absätzen beschriebene Auslegung limitiert. Beispielsweise kann die vorteilhafte Steuerbarkeit des Hauptbremszylinders in die beiden Betriebsmoden auch über einen an mindestens einen Kolbenbauteil ausgebildeten Arretiermechanismus und/oder steuerbaren Anklopplungsmechanismus zwischen den beiden Kolbenbauteilen realisierbar sein.

In einer vorteilhaften Ausführungsform ist die erste Druckkammer zumindest teilweise als ein Innenhohlraum des zweiten Kolbenbauteils ausgebildet, in welchem das erste Kolbenbauteil zumindest teilweise hineinverstellbar ist. Dies gewährleistet die Möglichkeit, den Durchmesser des ersten Kolbenbauteils vergleichsweise klein auszulegen. Dadurch kann im Aktivbetrieb ein gutes Pedalgefühl realisiert werden. Durch die geringe Volumenverschiebung in den an die erste Druckkammer angebundenen Bremskreis ist ein vorteilhaftes (standardgemäßes) Bremsbetätigungsgefühl (Pedalgefühl) erzielbar. Durch den vergleichsweise kleinen Durchmesser des ersten Kolbenbauteils sind jedoch auch bei vergleichsweise kleinen Bremsbetätigungskräften (Pedalkräften) ein relativ hoher Druckaufbau in der ersten Druckkammer, und damit eine hohe Verzögerung, möglich.

Die in den vorausgehenden Absätzen beschriebenen Vorteile sind auch bei einem Bremssystem für ein Fahrzeug mit einem entsprechenden Hauptbremszylinder gewährleistet.

In einer vorteilhaften Weiterbildung umfasst das Bremssystem einen Bremskreis, welcher durch Steuern des Ventils in einen geschlossenen Zustand von dem Hauptbremszylinder abkoppelbar ist. Wie nachfolgend genauer beschrieben wird, ist der oben beschriebene Hauptbremszylinder insbesondere in einem Bremssystem mit einem abkoppelbaren Bremskreis vorteilhaft einsetzbar. Die Einsetzbarkeit des vorteilhaften Hauptbremszylinders ist jedoch nicht auf ein derartiges Bremssystem limitiert.

Die oben beschriebenen Vorteile sind auch bei einem korrespondierenden Verfahren zum Betreiben eines Bremssystems mit einem Hauptbremszylinder gewährleistet.

### Kurze Beschreibung der Zeichnungen

Weitere Merkmale und Vorteile der vorliegenden Erfindung werden nachfolgend anhand der Figuren erläutert. Es zeigen:
Fig. 1 eine schematische Darstellung einer Ausführungsform des Hauptbremszylinders; und
Fig. 2 ein Flussdiagramm zum Darstellen einer Ausführungsform des Verfahrens zum Betreiben eines Bremssystems mit einem Hauptbremszylinder.

### Ausführungsformen der Erfindung

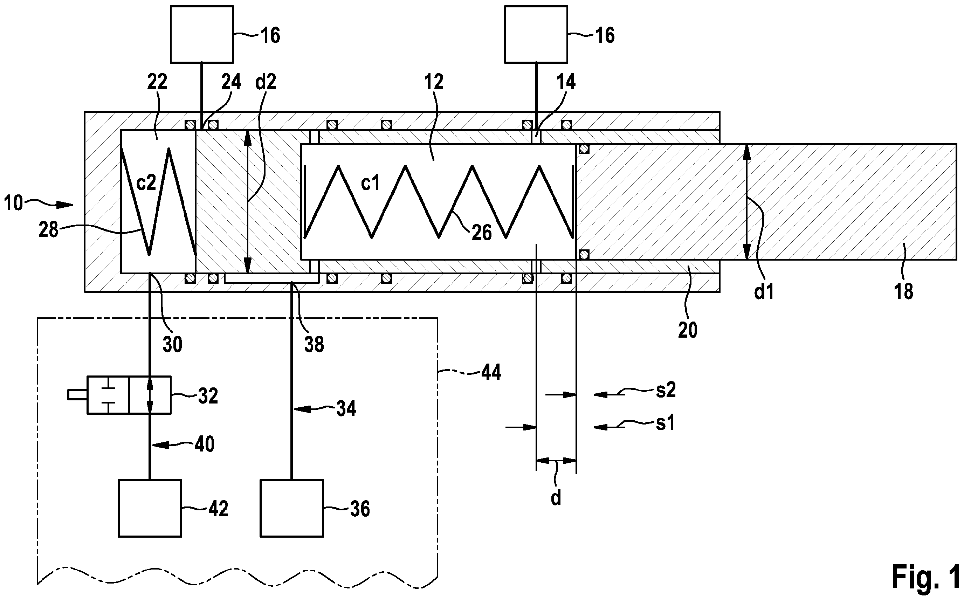

Fig. 1 zeigt eine schematische Darstellung einer Ausführungsform des Hauptbremszylinders.

Der in Fig. 1 schematisch wiedergegebene Hauptbremszylinder 10 ist in einem Bremssystem eines Fahrzeugs einsetzbar. Der Hauptbremszylinder 10 weist zumindest eine erste Druckkammer 12 auf, an welcher mindestens eine erste Reservoiranbindungsöffnung 14 ausgebildet ist. Unter der mindestens einen ersten Reservoiranbindungsöffnung 14 kann eine hydraulische Verbindung zum Anbinden der ersten Druckkammer 12 an ein Bremsflüssigkeitsreservoir 16, wie beispielsweise eine Schnüffelbohrung, verstanden werden. Die Ausbildbarkeit der mindestens einen ersten Reservoiranbindungsöffnung 14 ist jedoch nicht auf Schnüffelbohrungen limitiert. Ebenso ist das mit dem Hauptbremszylinder 10 zusammenwirkende Bremsflüssigkeitsreservoir 16 nicht auf einen bestimmten Typ beschränkt. Unter dem Bremsflüssigkeitsreservoir 16 kann beispielsweise ein Bremsflüssigkeitsbehälter verstanden werden, in welchem ein konstanter Druck, wie beispielsweise der Atmosphärendruck, vorliegt.

Der Hauptbremszylinder 10 weist ein erstes Kolbenbauteil 18 und ein zweites Kolbenbauteil 20 auf. Dabei ist die mindestens eine erste Reservoiranbindungsöffnung 14 der ersten Druckkammer 12 mittels des zumindest um einen ersten Mindest-Abdichtweg s1 aus seiner ersten Ausgangsstellung verstellten ersten Kolbenbauteils 18 abdichtbar. Außerdem ist die mindestens eine erste Reservoiranbindungsöffnung 14 der ersten Druckkammer 12 zusätzlich mittels des um zumindest um einen zweiten Mindest-Abdichtweg s2 ungleich dem ersten Mindest-Abdichtweg s1 aus seiner zweiten Ausgangsstellung verstellten zweiten Kolbenbauteils 20 abdichtbar. Unter dem Abdichten der mindestens einen ersten Reservoiranbindungsöffnung 14 mittels des ersten Kolbenbauteils 18 oder mittels des zweiten Kolbenbauteils 20 ist nicht unbedingt ein direktes Abdecken der mindestens einen ersten Reservoiranbindungsöffnung 14 zu verstehen. Stattdessen kann das Abdichten der mindestens einen ersten Reservoiranbindungsöffnung 14 mittels des ersten Kolbenbauteils 18 oder mittels des zweiten Kolbenbauteils 20 so interpretiert werden, dass durch ein Verstellen des ersten Kolbenbauteils 18 zumindest um den ersten Mindest-Abdichtweg s1 oder des zweiten Kolbenbauteils 20 zumindest um den zweiten Mindest-Abdichtweg s2 die über die mindestens eine erste Reservoiranbindungsöffnung 14 realisierbare hydraulische Verbindung der ersten Druckkammer 12 mit dem Bremsflüssigkeitsreservoir 16 unterbindbar/unterbrechbar ist.

Aufgrund der realisierten wahlweisen Abdichtbarkeit der mindestens einen ersten Reservoiranbindungsöffnung 14 entweder mittels des um zumindest den ersten Mindest-Abdichtweg s1 verstellten ersten Kolbenbauteils 18 oder mittels des um zumindest den zweiten Mindest-Abdichtweg s2 verstellten zweiten Kolbenbauteils 20 ist der vor einem Druckaufbau in der ersten Druckkammer 12 zu überwindende Leerweg zwischen mindestens zwei Werten variierbar. Man kann dies auch so umschreiben, dass der Leerweg um eine Differenz d wahlweise steiger- oder reduzierbar ist, welche insbesondere einer Differenz der beiden Mindest-Abdichtweg s1 und s2 entsprechen kann. Das Festlegen des Leerwegs wahlweise auf einen zu einem der beiden Mindest-Abdichtwege entsprechenden Wert ist auf einfache Weise ausführbar, indem wahlweise bei einer Betätigung des Bremsbetätigungselements entweder das erste Kolbenbauteil 18 und/oder das zweite Kolbenbauteil 20 verstellt wird. Genauere Ausführungen zu diesem Vorgang werden unten noch gemacht.

Der erste Mindest-Abdichtweg s1 kann beispielsweise größer als der zweite Mindest-Abdichtweg s2 sein. Die Ausbildbarkeit des Hauptbremszylinders 10 ist jedoch nicht auf diese Größenordnung der Mindest-Abdichtwege s1 und s2 limitiert.

Optionaler Weise kann der Hauptbremszylinder 10 eine von dem zweiten Kolbenbauteil 20 begrenzte zweite Druckkammer 22 aufweisen, an welcher mindestens eine zweite Reservoiranbindungsöffnung 24 ausgebildet ist, welche mittels des zweiten Kolbenbauteils 20 abdichtbar ist. Die oben beschriebenen Vorteile des Hauptbremszylinders 10 sind somit auch bei einem Tandem-Hauptbremszylinder realisierbar.

In einer vorteilhaften Ausbildung ist die mindestens eine zweite Reservoiranbindungsöffnung 24 der zweiten Druckkammer 22 mittels des um einen (nicht skizzierten) Kolbenweg kleiner als dem zweiten Mindest-Abdichtweg s2 aus seiner zweiten Ausgangsstellung verstellten zweiten Kolbenbauteils 20 abdichtbar. Wie unten genauer ausgeführt wird, realisiert dies ein einfach ausführbares und verlässliches Festlegen der bevorzugten Verstellbarkeit der mindestens zwei Kolbenbauteile 18 und 20 bei einer Betätigung des Bremsbetätigungselements.

Das erste Kolbenbauteil 18 und/oder das zweite Kolbenbauteil 20 können beispielsweise als Stangenkolben ausgebildet sein. Ebenso sind das erste Kolbenbauteil 18 und/oder das zweite Kolbenbauteil 20 auch als Primärkolben ausbildbar. Es wird darauf hingewiesen, dass unter dem ersten Kolbenbauteil 18 und/oder dem zweiten Kolbenbauteil 20 jedoch nicht ein bestimmter Typ eines Stangenkolbens oder eines Primärkolbens zu verstehen ist. Das erste Kolbenbauteil 18 und/oder das zweite Kolbenbauteil 20 können somit auch von einem Stangenkolben oder einem Primärkolben abweichende Merkmale aufweisen. Außerdem kann das zweite Kolbenbauteil 20 auch als Schwimmkolben und/oder Sekundärkolben zumindest teilweise ausgebildet sein. Der vorteilhafte Hauptbremszylinder 10 ist somit nicht auf einen bestimmten Kolbentyp für das erste Kolbenbauteil 18 oder das zweite Kolbenbauteil 20 limitiert.

Unter der ersten Ausgangsstellung des ersten Kolbenbauteils 18 kann die Stellung verstanden werden, in welcher das erste Kolbenbauteil 18 vorliegt, sofern keine Bremskraft auf das erste Kolbenbauteil 18 und/oder ein an dem Hauptbremszylinder 10 angeordnetes Bremsbetätigungselement, wie beispielsweise ein Bremspedal, ausgeübt wird. Auch unter der zweiten Ausgangsstellung des zweiten Kolbenbauteils 20 kann eine Stellung verstanden werden, in welcher das zweite Kolbenbauteil 20 vorliegt, wenn keine Fahrerbremskraft auf das zweite Kolbenbauteil 20 und/oder das Bremsbetätigungselement ausgeübt wird. Unter der Bremskraft kann eine Fahrerbremskraft und/oder eine Bremskraftverstärker-Kraft verstanden werden. Das Verstellen des ersten Kolbenbauteils 18 aus seiner ersten Ausgangsstellung und/oder das Verstellen des zweiten Kolbenbauteils 20 aus seiner zweiten Ausgangsstellung erfolgt vorzugsweise mittels einer auf das Bremsbetätigungselement ausgeübten Fahrerbremskraft. Als Ergänzung zu der Fahrerbremskraft kann noch eine von einem Bremskraftverstärker bereitgestellte Bremskraftverstärker-Kraft optional auf mindestens eines der Kolbenbauteile 18 und 20 ausübbar sein.

Bei der dargestellten Ausführungsform ist der Hauptbremszylinder 10 in einen ersten Betriebsmodus steuerbar, in welchem ein erstes Maximum einer dem Verstellen des ersten Kolbenbauteils 18 entlang des ersten Mindest-Abdichtwegs s1 entgegenwirkenden Gegenkraft kleiner als ein zweites Maximum einer dem Verstellen des zweiten Kolbenbauteils 20 entlang des zweiten Mindest-Abdichtwegs entgegenwirkenden Gegenkraft ist. Zusätzlich ist der Hauptbremszylinder 10 in einen zweiten Betriebsmodus steuerbar, in welchem das erste Maximum der dem Verstellen des ersten Kolbenbauteils 18 entlang des ersten Mindest-Abdichtwegs s1 entgegenwirkenden Gegenkraft größer oder gleich als das zweite Maximum der dem Verstellen des zweiten Kolbenbauteils 20 entlang des zweiten Mindest-Abdichtwegs s2 entgegenwirkenden Gegenkraft ist.

Eine Übertragung der Bremskraft, wie z.B. der zumindest der auf das Bremsbetätigungselement ausgeübten Fahrerbremskraft, auf die beiden Kolbenbauteile 18 und 20 bewirkt somit in dem ersten Betriebsmodus ein Verstellen des ersten Kolbenbauteils 18 aus seiner ersten Ausgangsstellung um den ersten Mindest-Abdichtweg s1, während ein (vollständiges) Verstellen des zweiten Kolbenbauteils 20 um den zweiten Mindest-Abdichtweg s2 zumindest während dieses Vorgangs unterbunden/verhindert ist. Man kann dies auch so umschreiben, dass in dem ersten Betriebsmodus des Hauptbremszylinders 10 die mindestens eine erste Reservoiranbindungsöffnung 14 lediglich mittels des um zumindest um den ersten Mindest-Abdichtweg s1 aus seiner ersten Ausgangsstellung verstellten ersten Kolbenbauteils 18 abdichtbar ist, während ein vorzeitiges Abdichten der mindestens einen ersten Reservoiranbindungsöffnung 14 mittels des zweiten Kolbenbauteils 20 vor dem Verstellen des ersten Kolbenbauteils 18 um zumindest den ersten Mindest-Abdichtweg s1 unterbunden ist.

Demgegenüber ist in dem zweiten Betriebsmodus das zweite Kolbenbauteil 20 aus seiner Ausgangsstellung um zumindest den zweiten Mindest-Abdichtweg s2 verstellbar, bevor die Verstellbewegung des ersten Kolbenbauteils 18 aus seiner ersten Ausgangsstellung um zumindest den ersten Mindest-Abdichtweg s1 (vollständig) bewirkt/bewirkbar ist. In dem zweiten Betriebsmodus wird somit vor dem (vollständigen) Verstellen des ersten Kolbenbauteils 18 aus seiner ersten Ausgangsstellung um den ersten Mindest-Abdichtweg s1 die mindestens eine Reservoiranbindungsöffnung 14 mittels des um den zweiten Mindest-Abdichtweg s2 aus seiner zweiten Ausgangsstellung verstellten zweiten Kolbenbauteils 20 abgedichtet.

Die vorteilhafte Steuerbarkeit des Hauptbremszylinders 10 wahlweise in den ersten Betriebsmodus oder in den zweiten Betriebsmodus ist bei der dargestellten Ausführungsform realisiert, indem eine sich an dem ersten Kolbenbauteil 18 abstützende erste Rückstellfeder 26 in der ersten Druckkammer 12 eine erste Federkonstante c1 aufweist, während eine sich an dem zweiten Kolbenbauteil 20 abstützende zweite Rückstellfeder 28 in der zweiten Druckkammer 22 eine zweite Federkonstante c2 kleiner als die erste Federkonstante c1 hat. Außerdem ist eine zusätzlich zu der mindestens einen zweiten Reservoiranbindungsöffnung 24 an der zweiten Druckkammer 22 ausgebildete Bremskreisanbindungsöffnung 30 mittels eines Ventils 32, welches als stromlos offenes Ventil ausgebildet ist, schließbar. Wird nach einem Schließen des Ventils 32 eine Bremskraft (Fahrerbremskraft) auf die zwei Kolbenbauteile 18 und 20 ausgeübt, so kann keine Flüssigkeit aus der zweiten Druckkammer 22 über die Bremskreisanbindungsöffnung 30 in ein daran angebundenes Volumen entweichen. Da bereits ein Verstellen des zweiten Kolbenbauteils 20 aus seiner Ausgangsstellung um den Kolbenweg ein Abdichten der mindestens einen zweiten Reservoiranbindungsöffnung 24 bewirkt, wirkt einem Hineinverstellen des zweiten Kolbenbauteils 20 in die zweite Druckkammer 22 somit bereits frühzeitig eine vergleichsweise große Kraft entgegen. Das zweite Kolbenbauteil 20 verharrt deshalb in dieser Betriebssituation bereits nach dem Verstellen aus seiner zweiten Ausgangsstellung um den Kolbenweg in einer Zwischenstellung, welche zwischen seiner zweiten Ausgangsstellung und der Stellung des um den zweiten Mindest-Abdichtweg s2 verstellten zweiten Kolbenbauteils 20 liegt. Deshalb bewirkt die auf die beiden Kolbenbauteile 18 und 20 ausgeübte Bremskraft (Fahrerbremskraft) trotz der größeren Federkonstante c1 der ersten Rückstellfeder 26 ein Komprimieren von dieser und damit ein Hineinverstellen des ersten Kolbenbauteils 18 entgegen der Rückstellkraft der ersten Rückstellfeder 26. Während das Verharren des zweiten Kolbenbauteils 20 in der Zwischenstellung einem weiteren Verstellen des zweiten Kolbenbauteils 20 um den zweiten Mindest-Abdichtweg s2 entgegenwirkt, ist somit das erste Kolbenbauteil 18 trotz der kleineren Federkonstante c2 der zweiten Rückstellfeder 28 um den ersten Mindest-Abdichtweg s1 verstellbar.
Demgegenüber kann bei einem Vorliegen des Ventils 32 in einem zumindest teilgeöffneten Zustand trotz eines Abdichtens der mindestens einen zweiten Reservoiranbindungsöffnung 24 mittels des um den Kolbenweg verstellten zweiten Kolbenbauteils 20 weiterhin Bremsflüssigkeit aus der zweiten Druckkammer über das Ventil 32 abfließen. Aufgrund der kleineren Federkonstante c2 der zweiten Rückstellfeder 28 bewirkt die auf die beiden Kolbenbauteile 18 und 20 ausgeübte Bremskraft (Fahrerbremskraft) somit (fast) ausschließlich eine Verstellbewegung des zweiten Kolbenbauteils 20, während das erste Kolbenbauteil 18 (nahezu) in seiner ersten Ausgangsstellung verharrt. Das zweite Kolbenbauteil 20 wird somit vergleichsweise schnell/frühzeitig um den zweiten Mindest-Abdichtweg s2 verschoben, was das oben schon beschriebene Abdichten der mindestens einen ersten Reservoiranbindungsöffnung 14 mittels des zweiten Kolbenbauteils 20 bewirkt.
Während in dem zweiten Betriebsmodus zum Abdichten der mindestens einen ersten Reservoiranbindungsöffnung 14 lediglich so lange die Bremskraft (Fahrerbremskraft) auf die beiden Kolbenbauteile 18 und 20 auszuüben ist, bis das zweite Kolbenbauteil 20 aus seiner zweiten Ausgangsstellung um den zweiten Mindest-Abdichtweg s2 mitverstellt ist, erfordert ein Abdichten der mindestens einen ersten Reservoiranbindungsöffnung 14 in den ersten Betriebsmodus ein deutlich längeres Ausüben der Bremskraft (Fahrerbremskraft) auf die beiden Kolbenbauteile 18 und 20, bis das erste Kolbenbauteil 18 aus seiner Ausgangsstellung um den ersten Mindest-Abdichtweg s1 verstellt ist.

Sofern das Ventil 32 in zumindest einem teilgeöffneten Zustand vorliegt, ist der Hauptbremszylinder 10 in den zweiten Betriebsmodus gesteuert. Demgegenüber bewirkt ein Schließen des Ventils 32 das Steuern des Hauptbremszylinders 10 in den ersten Betriebsmodus. Somit kann mittels des Steuerns des Hauptbremszylinders 10 wahlweise in den ersten Betriebsmodus oder in den zweiten Betriebsmodus der zum Abdichten der mindestens einen ersten Reservoiranbindungsöffnung 14 für einen Druckaufbau in der ersten Druckkammer 12 zu überwindende Leerweg um die oben schon genannte Differenz d variiert werden.

Das in Fig. 1 wiedergegebene Hauptbremszylinder-Design gibt einen Hauptbremszylinder 10 wieder, dessen erste Druckkammer 12 zumindest teilweise als ein Innenhohlraum des zweiten Kolbenbauteils 20 ausgebildet ist. Dabei ist das erste Kolbenbauteil 18 zumindest teilweise in den Innenhohlraum des zweiten Kolbenbauteils 20 hineinverstellbar. Dies gewährleistet beispielsweise eine Reduzierung eines ersten Durchmessers d1 des ersten Kolbenbauteils 18 senkrecht zu seiner Verstellrichtung gegenüber einem zweiten Durchmesser d2 des zweiten Kolbenbauteils 20 senkrecht zu dessen Verstellrichtung. Die damit verbundenen Vorteile sind oben schon genannt. Außerdem kann die vorteilhafte Abdichtbarkeit der mindestens einen ersten Reservoiranbindungsöffnung 14 mittels des um zumindest den zweiten Mindest-Abdichtweg s2 verstellten zweiten Kolbenbauteils 20 auf einfache Weise realisiert werden, indem mindestens eine durchgehende Aussparung in dem zweiten Kolbenbauteil 20 ausgebildet wird, welche bei einem Vorliegen des Kolbenbauteils 20 in seiner zweiten Ausgangstellung an der mindestens einen ersten Reservoiranbindungsöffnung 14 anliegt. Es wird jedoch darauf hingewiesen, dass die in Fig. 1 wiedergegebene Ausbildung der ersten Druckkammer 12 lediglich beispielhaft zu interpretieren ist.

Der in Fig. 1 dargestellte Hauptbremszylinder 10 ist in einem Bremssystem eingesetzt, welches einen ersten Bremskreis 34 mit zumindest einer ersten Radbremszange 36 umfasst, welcher über eine an der ersten Druckkammer 12 ausgebildete Bremskreisanbindungsöffnung 38 angebunden ist. Außerdem weist das Bremssystem einen zweiten Bremskreis 40 mit mindestens einer Radbremszange 42 auf, welcher über das Ventil 32 an die zweite Druckkammer 22 angebunden ist und somit durch das Steuern des Ventils 32 in den geschlossenen Zustand von dem Hauptbremszylinder 10 abkoppelbar ist. Bei der dargestellten Ausführungsform übt das Ventil 32 somit eine Multifunktionalität einerseits zum Steuern des Hauptbremszylinders 10 in einen bevorzugten Betriebsmodus und andererseits zum wahlweisen Abkoppeln des zweiten Bremskreises 40 von dem Hauptbremszylinder 10 aus. Dies gewährleistet die nachfolgend genauer beschriebenen Vorteile:

Sofern ein aus Komponenten des ersten Bremskreises 34 und des zweiten Bremskreises 40 gebildetes Hydroaggregat 44 (Hydraulikaggregat) in einem funktionsfähigen Zustand vorliegt und dessen Energieversorgung gewährleistet ist, kann bei einem, beispielsweise mittels eines Pedalwegsensors oder eines Pedalkraftsensors erkannten Bremswunsch das Ventil 32 geschlossen werden. Wie oben beschrieben, bewirkt dies ein Steuern des Hauptbremszylinders 10 in den ersten Betriebsmodus und ein Steigern des vor einem Druckaufbau in der ersten Druckkammer12 und in dem ersten Bremskreis 34 zu überwindenden Leerwegs um die Differenz d. Man kann dies auch so umschreiben, dass vor dem Überwinden des um die Differenz d gesteigerten Leerwegs (in dem ersten Betriebsmodus des Hauptbremszylinders 10) kein Druck in der Druckkammer 12 und in dem Bremskreis 34 trotz einer Bremskraft ungleich Null, bzw. einer Betätigung des Bremsbetätigungselements, aufgebaut wird. Die durch die Steigerung des Leerwegs um die Differenz d hinausgezögerte Bremswirkung der mindestens einen Radbremszange 36 des ersten Bremskreises 34 kann durch das Einsetzen eines (nicht dargestellten) Generators zum rekuperativen Bremen genutzt werden. Insbesondere kann das gesamte vom Fahrer angeforderte Bremsmoment mittels des Generators ausgeübt werden, was eine sehr hohe/maximale rekuperative Effizienz bewirkt.

Auf diese Weise ist vergleichsweise viel Bremsenergie zum Aufladen der Fahrzeugbatterie zurückgewinnbar. Insbesondere ist aufgrund des um die Differenz d gesteigerten Leerwegs eine größere rekuperative Effizienz des Bremssystems möglich. Damit kann die Fahrzeugbatterie vergleichsweise klein ausgelegt werden, was die Fahrzeugkosten signifikant reduziert. Sofern das durch den Generator aufbringbare generatorische Bremsmoment für das vom Fahrer angeforderte Bremsmoment nicht ausreicht, kann zusätzlich mittels des Hydraulikaggregats 44 ein weiteres Bremsmoment erzeugt werden. Außerdem hat der Fahrer die Möglichkeit, nach dem Überwinden des um die Differenz d gesteigerten Leerwegs direkt in den ersten Bremskreis 34 einzubremsen. Somit ist gewährleistbar, dass das vom Fahrer angeforderte Bremsmoment verlässlich ausführbar ist.

Sofern eine Funktionsbeeinträchtigung des Generators oder einer Komponente des Bremssystems vorliegt, beispielsweise weil die Energieversorgung des Bremssystems nicht ausreichend gewährleistet ist, kann das Bremssystem auch in einer vorteilhaften Rückfallebene betrieben werden. Dazu wird das Ventil 32 in einen zumindest teilgeöffneten Zustand gesteuert. Da das Ventil 32 als stromlos offenes Ventil ausgebildet ist, erfolgt dies automatisch bei einer Beeinträchtigung der Stromversorgung des Bremssystems. Durch das Steuern des Ventils 32 in den zumindest teilgeöffneten Zustand wird der Hauptbremszylinder 10 in den oben schon beschriebenen zweiten Betriebsmodus gesteuert. Man kann dies auch so umschreiben, dass aufgrund des Vorliegens der Kommunikation zwischen der zweiten Druckkammer 22 und dem daran angeschlossenen zweiten Bremskreis 40 über das zumindest teilgeöffnete Ventil 32 und der kleineren Federkonstante c2 der zweiten Rückstellfeder 28 das zweite Kolbenbauteil 20 frühzeitig um den zweiten Mindest-Abdichtweg s2 verstellbar ist, während das erste Kolbenbauteil 18 (nahezu) in seiner ersten Ausgangsstellung verharrt. Durch die Verstellbewegung des zweiten Kolbenbauteils 20 aus seiner zweiten Ausgangsstellung um den zweiten Mindest-Abdichtweg s2 wird die Kommunikation zwischen der ersten Druckkammer 12 und dem Bremsflüssigkeitsreservoir 16 frühzeitig unterbrochen. Somit kann der Fahrer bereits nach einem Überwinden eines vergleichsweise kleinen Leerwegs in die erste Druckkammer 12, und damit in den ersten Bremskreis 34, direkt hineinbremsen. Es wird damit relativ frühzeitig, d. h. bereits nach dem um die Differenz d reduzierten Leerweg, ein Bremsdruck in der ersten Druckkammer 12 und in dem ersten Bremskreis 34 aufgebaut. In der vorteilhaften Rückfallebene ist der von einem Fahrer auszuführende Bremsbetätigungsweg (Pedalweg) für einen Druckaufbau somit vergleichsweise gering. Außerdem kann der Fahrer in der Rückfallebene (aufgrund der Ankoppelbarkeit des zweiten Bremskreises 42 an den Hauptbremszylinder 10 mittels des geöffneten Ventils 32) auch in der zweiten Druckkammer 22 einen Bremsdruck aufbauen, welche über das zumindest teilgeöffnete Ventil 32 auf den zweiten Bremskreis 40 übertragen wird. In der Rückfallebene kann der Fahrer somit bereits nach dem Überwinden des um die Differenz d reduzierten Leerwegs direkt, beispielsweise mittels eines Bremspedals, in alle vier Räder einbremsen. Dies gewährleistet einen vorteilhaften Bremskomfort für den Fahrer in der Rückfallebene.
Das in Fig. 1 dargestellte Bremssystem ist insbesondere für ein kleines Elektrofahrzeug vorteilhaft. Aufgrund der vorteilhaften Einsetzbarkeit des Hydroaggregats 44 zum Verstärken der von dem Fahrer bewirkten Bremswirkung, bzw. zum Verstärken der Bremswirkung des Generators, kann auf eine zusätzliche Bremskraftverstärkung, beispielsweise mittels eines hydraulischen oder eines elektromechanischen Bremskraftverstärkers verzichtet werden. Dies reduziert die Kosten für ein kleines Elektrofahrzeug signifikant. Durch die Abkoppelbarkeit des zweiten Bremskreises 40 von dem Hauptbremszylinder 10 ist zusätzlich eine Modulation von Bremsmomenten ohne spürbare Rückwirkung auf das Bremsbetätigungselement ausführbar. Insbesondere können bereits bekannte Verblendverfahren zum Verblenden der rekuperativen Bremsmomente mit den Bremsmomenten der Radbremszangen 36 und 42 ausgeführt werden. Auf eine Beschreibung dieser standardgemäßen Verfahren wird hier verzichtet.

Durch die Reduzierung des Durchmessers d1 des ersten Kolbenbauteils 18 ist auch ein Hauptbremszylinder 10 mit einem vergleichsweise kleinen wirksamen Hauptbremszylinderdurchmesser im Vollsystem ausübbar. Dies begünstigt ein vorteilhaftes Bremsbetätigungsgefühl (Pedalgefühl) für den Fahrer.

Als Alternative zu der Ausbildung der Federkonstanten c1 und c2 der Rückstellfedern 26 und 28 und/oder der vorteilhaften Ausstattung mit dem Ventil 32 kann auch ein Arretiermechanismus und/oder ein Mitnehmmechanismus an mindestens einem der Kolbenbauteile 18 und/oder 20 ausgebildet sein.

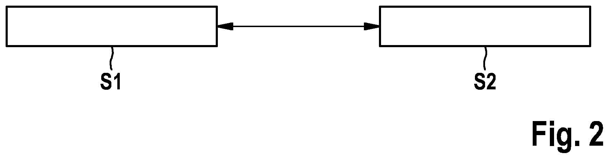

Fig. 2 zeigt ein Flussdiagramm zum Darstellen einer Ausführungsform des Verfahrens zum Betreiben eines Bremssystems mit einem Hauptbremszylinder.

Das Verfahren ist ausführbar mit einem Hauptbremszylinder mit zumindest einer Druckkammer mit mindestens einer Reservoiranbindungsöffnung, welche bei einem Verstellen eines ersten Kolbenbauteils des Hauptbremszylinders aus seiner ersten Ausgangsstellung um einen ersten Mindest-Abdichtweg abgedichtet wird, und welche zusätzlich bei einem Verstellen eines zweiten Kolbenbauteils des Hauptbremszylinders aus seiner zweiten Ausgangsstellung um einen zweiten Mindest-Abdichtweg ungleich dem ersten Mindest-Abdichtweg abgedichtet wird. Beispielsweise kann zum Ausführen des Verfahrens die oben beschriebene Ausführungsform des Hauptbremszylinders verwendet werden. Die Ausführbarkeit des Verfahrens ist jedoch nicht auf die Verwendung eines derartigen Hauptbremszylinders limitiert.

In einem Verfahrensschritt S1 wird ein Leerweg der Druckkammer, d.h. ein für einen Druckaufbau in der Druckkammer zu überwindenden Mindestbetätigungsweg eines Bremsbetätigungselements, auf eine zu dem ersten Mindest-Abdichtweg korrespondierende erste Länge festgelegt. Dies erfolgt durch Steuern des Hauptbremszylinders in einen ersten Modus, in welchem ein Mitverstellen des zweiten Kolbenbauteils um den zweiten Mindest-Abdichtweg trotz einer auf zumindest das erste Kolbenbauteil ausgeübten Bremskraft unterbunden wird. Das Steuern des Hauptbremszylinders in den ersten Modus kann, wie oben schon beschrieben, durch Betätigen eines Ventils erfolgen.

In einem weiteren Verfahrensschritt S2 wird der Leerweg der Druckkammer auf eine zu dem zweiten Mindest-Abdichtweg korrespondierende zweite Länge ungleich der ersten Länge festgelegt. Dies ist ausführbar durch Steuern des Hauptbremszylinders in einen zweiten Modus, in welchem das zweite Kolbenbauteil aufgrund der zumindest auf das erste Kolbenbauteil ausgeübten Bremskraft mit dem ersten Kolbenbauteil mitverstellt wird. Bezüglich der möglichen Betätigung eines Ventils zur Ausführung des Verfahrensschritts S2 wird auf das obere Beispiel verwiesen.

Die Verfahrensschritte S1 und S2 können in beliebiger Reihenfolge und wiederholt ausgeführt werden.

## Patentansprüche

1. Hauptbremszylinder (10) für ein Bremssystem eines Fahrzeugs mit:
einer ersten Druckkammer (12), an welcher mindestens eine erste Reservoiranbindungsöffnung (14) ausgebildet ist;
einem ersten Kolbenbauteil (18) und einem zweiten Kolbenbauteil (20);
wobei die mindestens eine erste Reservoiranbindungsöffnung (14) der ersten Druckkammer (12) mittels des um zumindest um einen ersten Mindest-Abdichtweg (s1) aus seiner ersten Ausgangsstellung verstellten ersten Kolbenbauteils (18) abdichtbar ist,
wobei die mindestens eine erste Reservoiranbindungsöffnung (14) der ersten Druckkammer (12) zusätzlich mittels des um zumindest um einen zweiten Mindest-Abdichtweg (s2) aus seiner zweiten Ausgangsstellung verstellten zweiten Kolbenbauteils (20) abdichtbar ist, wobei der erste Mindest-Abdichtweg (s1) größer als der zweite Mindest-Abdichtweg (s2) ist,
wobei der Hauptbremszylinder (10) eine von dem zweiten Kolbenbauteil (20) begrenzte zweite Druckkammer (22) aufweist, an welcher mindestens eine zweite Reservoiranbindungsöffnung (24) ausgebildet ist, welche mittels des zweiten Kolbenbauteils (20) abdichtbar ist,
und wobei eine zusätzlich zu der mindestens einen zweiten Reservoiranbindungsöffnung (24) an der zweiten Druckkammer (22) ausgebildete Bremskreisanbindungsöffnung (30) mittels eines Ventils (32) des Hauptbremszylinders (10) schließbar ist,
**dadurch gekennzeichnet, dass**
das Ventil (32) als stromlos offenes Ventil (32) ausgebildet ist und der Hauptbremszylinder (10) durch ein Steuern des Ventils (32) in seinen geschlossenen Zustand in einen ersten Betriebsmodus steuerbar ist, in welchem ein erstes Maximum einer dem Verstellen des ersten Kolbenbauteils (18) entlang des ersten Mindest-Abdichtwegs (s1) entgegenwirkenden Gegenkraft kleiner als ein zweites Maximum einer dem Verstellen des zweiten Kolbenbauteils (20) entlang des zweiten Mindest-Abdichtwegs (s2) entgegenwirkenden Gegenkraft ist, während der Hauptbremszylinder (10) durch ein Steuern des Ventils (32) in seinen zumindest teilgeöffneten Zustand in einen zweiten Betriebsmodus steuerbar ist, in welchem das erste Maximum der dem Verstellen des ersten Kolbenbauteils (18) entlang des ersten Mindest-Abdichtwegs (s1) entgegenwirkenden Gegenkraft größer oder gleich als das zweite Maximum der dem Verstellen des zweiten Kolbenbauteils (20) entlang des zweiten Mindest-Abdichtwegs (s2) entgegenwirkenden Gegenkraft ist.

2. Hauptbremszylinder (10) nach Anspruch 1, wobei die mindestens eine zweite Reservoiranbindungsöffnung (24) der zweiten Druckkammer (22) mittels des um einen Kolbenweg kleiner als dem zweiten Mindest-Abdichtweg (s2) aus seiner zweiten Ausgangsstellung verstellten zweiten Kolbenbauteils (20) abdichtbar ist.

3. Hauptbremszylinder (10) nach Anspruch 1 oder 2, wobei eine sich an dem ersten Kolbenbauteil (18) abstützende erste Rückstellfeder (26) in der ersten Druckkammer (12) eine erste Federkonstante (c1) aufweist, und eine sich an dem zweiten Kolbenbauteil (20) abstützende zweite Rückstellfeder (28) in der zweiten Druckkammer (22) eine zweite Federkonstante (c2) kleiner als die erste Federkonstante (c1) aufweist.

4. Hauptbremszylinder (10) nach einem der vorhergehenden Ansprüche, wobei die erste Druckkammer (12) zumindest teilweise als ein Innenhohlraum des zweiten Kolbenbauteils (20) ausgebildet ist, in welchen das erste Kolbenbauteil (18) zumindest teilweise hineinverstellbar ist.

5. Bremssystem für ein Fahrzeug mit:
einem Hauptbremszylinder (10) umfassend:
- eine erste Druckkammer (12), an welcher mindestens eine erste Reservoiranbindungsöffnung (14) ausgebildet ist;
- ein erstes Kolbenbauteil (18); und
- ein zweites Kolbenbauteil (20);
wobei die mindestens eine erste Reservoiranbindungsöffnung (14) der ersten Druckkammer (12) mittels des um zumindest um einen ersten Mindest-Abdichtweg (s1) aus seiner ersten Ausgangsstellung verstellten ersten Kolbenbauteils (18) abdichtbar ist, und wobei die mindestens eine erste Reservoiranbindungsöffnung (14) der ersten Druckkammer (12) zusätzlich mittels des um zumindest um einen zweiten Mindest-Abdichtweg (s2) aus seiner zweiten Ausgangsstellung verstellten zweiten Kolbenbauteils (20) abdichtbar ist, wobei der erste Mindest-Abdichtweg (s1) größer als der zweite Mindest-Abdichtweg (s2) ist;
und wobei der Hauptbremszylinder (10) eine von dem zweiten Kolbenbauteil (20) begrenzte zweite Druckkammer (22) aufweist, an welcher mindestens eine zweite Reservoiranbindungsöffnung (24) ausgebildet ist, welche mittels des zweiten Kolbenbauteils (20) abdichtbar ist; und
einem Ventil (32) des Bremssystems, mittels welchem eine zusätzlich zu der mindestens einen zweiten Reservoiranbindungsöffnung (24) an der zweiten Druckkammer (22) ausgebildete Bremskreisanbindungsöffnung (30) schließbar ist;
**dadurch gekennzeichnet, dass**
das Ventil (32) als stromlos offenes Ventil (32) ausgebildet ist und der Hauptbremszylinder (10) durch ein Steuern des Ventils (32) in seinen geschlossenen Zustand in einen ersten Betriebsmodus steuerbar ist, in welchem ein erstes Maximum einer dem Verstellen des ersten Kolbenbauteils (18) entlang des ersten Mindest-Abdichtwegs (s1) entgegenwirkenden Gegenkraft kleiner als ein zweites Maximum einer dem Verstellen des zweiten Kolbenbauteils (20) entlang des zweiten Mindest-Abdichtwegs (s2) entgegenwirkenden Gegenkraft ist, während der Hauptbremszylinder (10) durch ein Steuern des Ventils (32) in seinen zumindest teilgeöffneten Zustand in einen zweiten Betriebsmodus steuerbar ist, in welchem das erste Maximum der dem Verstellen des ersten Kolbenbauteils (18) entlang des ersten Mindest-Abdichtwegs (s1) entgegenwirkenden Gegenkraft größer oder gleich als das zweite Maximum der dem Verstellen des zweiten Kolbenbauteils (20) entlang des zweiten Mindest-Abdichtwegs (s2) entgegenwirkenden Gegenkraft ist.

6. Bremssystem nach Anspruch 5, wobei das Bremssystem einen Bremskreis (40) umfasst, welcher durch Steuern des Ventils (32) in seinen geschlossenen Zustand von dem Hauptbremszylinder (10) abkoppelbar ist.

7. Verfahren zum Betreiben eines Bremssystems mit einem Hauptbremszylinder (10) mit einer ersten Druckkammer (12) mit mindestens einer ersten Reservoiranbindungsöffnung (14), welche bei einem Verstellen eines ersten Kolbenbauteils (18) des Hauptbremszylinders (10) aus seiner ersten Ausgangsstellung um einen ersten Mindest-Abdichtweg (s1) abgedichtet wird, und welche zusätzlich bei einem Verstellen eines zweiten Kolbenbauteils (20) des Hauptbremszylinders (10) aus seiner zweiten Ausgangsstellung um einen zweiten Mindest-Abdichtweg (s2) kleiner als der erste Mindest-Abdichtweg (s1) abgedichtet wird, und mit einer von dem zweiten Kolbenbauteil (20) begrenzten zweiten Druckkammer (22), an welcher mindestens eine mittels des zweiten Kolbenbauteils (20) abdichtbare zweite Reservoiranbindungsöffnung (24) ausgebildet ist, mit den Schritten:
Festlegen eines Leerwegs der ersten Druckkammer (12) auf eine zu dem ersten Mindest-Abdichtweg (s1) korrespondierende erste Länge durch Steuern eines stromlos offenen Ventils (32), mittels welchem eine zusätzlich zu der mindestens einen zweiten Reservoiranbindungsöffnung (24) an der zweiten Druckkammer (22) ausgebildete Bremskreisanbindungsöffnung (30) schließbar ist, in seinen geschlossenen Zustand, wodurch der Hauptbremszylinder (10) in einen ersten Modus gesteuert wird, in welchem ein Mitverstellen des zweiten Kolbenbauteils (20) um den zweiten Mindest-Abdichtweg (s2) trotz einer auf zumindest das erste Kolbenbauteil (18) ausgeübten Bremskraft unterbunden wird (S1); und
Festlegen des Leerwegs der ersten Druckkammer (12) auf eine zu dem zweiten Mindest-Abdichtweg (s2) korrespondierende zweite Länge ungleich der ersten Länge durch Steuern des stromlos offenen Ventils (32) in seinen zumindest teilgeöffneten Zustand, wodurch der Hauptbremszylinder (10) in einen zweiten Modus gesteuert wird, in welchem das zweite Kolbenbauteil (20) aufgrund der zumindest auf das erste Kolbenbauteil (18) ausgeübten Bremskraft mit dem ersten Kolbenbauteil (18) mitverstellt wird (S2).

## Claims

1. Brake master cylinder (10) for a brake system of a vehicle having:
a first pressure chamber (12), on which at least one first reservoir attachment opening (14) is configured;
a first piston component (18) and a second piston component (20);
it being possible for the at least one first reservoir attachment opening (14) of the first pressure chamber (12) to be sealed by means of the first piston component (18) which is adjusted out of its first starting position at least by a first minimum sealing travel (s1),
it being possible for the at least one first reservoir attachment opening (14) of the first pressure chamber (12) to be additionally sealed by means of the second piston component (20) which is adjusted out of its second starting position at least by a second minimum sealing travel (s2), the first minimum sealing travel (s1) being greater than the second minimum sealing travel (s2),
the brake master cylinder (10) having a second pressure chamber (22) which is delimited by the second piston component (20) and on which at least one second reservoir attachment opening (24) is configured which can be sealed by means of the second piston component (20),
and it being possible for a brake circuit attachment opening (30) which is configured on the second pressure chamber (22) in addition to the at least one second reservoir attachment opening (24) to be closed by means of a valve (32) of the brake master cylinder (10),
**characterized in that**
the valve (32) is configured as a normally open valve (32), and the brake master cylinder (10) can be controlled into a first operating mode by way of controlling of the valve (32) into its closed state, in which first operating mode a first maximum of a counter-force which counteracts the adjustment of the first piston component (18) along the first minimum sealing travel (s1) is smaller than a second maximum of a counter-force which counteracts the adjustment of the second piston component (20) along the second minimum sealing travel (s2), whereas the brake master cylinder (10) can be controlled into a second operating mode by way of controlling of the valve (32) into its at least partially open state, in which second operating mode the first maximum of the counter-force which counteracts the adjustment of the first piston component (18) along the first minimum sealing travel (s1) is greater than or equal to the second maximum of the counter-force which counteracts the adjustment of the second piston component (20) along the second minimum sealing travel (s2).

2. Brake master cylinder (10) according to Claim 1, it being possible for the at least one second reservoir attachment opening (24) of the second pressure chamber (22) to be sealed by means of the second piston component (20) which is adjusted out of its second starting position by a piston travel which is smaller than the second minimum sealing travel (s2).

3. Brake master cylinder (10) according to Claim 1 or 2, a first restoring spring (26) which is supported on the first piston component (18) in the first pressure chamber (12) having a first spring constant (c1), and a second restoring spring (28) which is supported on the second piston component (20) in the second pressure chamber (22) having a second spring constant (c2) which is smaller than the first spring constant (c1).

4. Brake master cylinder (10) according to one of the preceding claims, the first pressure chamber (12) being configured at least partially as an interior cavity of the second piston component (20), into which interior cavity the first piston component (18) can be adjusted at least partially.

5. Brake system for a vehicle having:
a brake master cylinder (10) comprising:
- a first pressure chamber (12), on which at least one first reservoir attachment opening (14) is configured;
- a first piston component (18); and
- a second piston component (20);
it being possible for the at least one first reservoir attachment opening (14) of the first pressure chamber (12) to be sealed by means of the first piston component (18) which is adjusted out of its first starting position at least by a first minimum sealing travel (s1), and it being possible for the at least one first reservoir attachment opening (14) of the first pressure chamber (12) to be additionally sealed by means of the second piston component (20) which is adjusted out of its second starting position at least by a second minimum sealing travel (s2), the first minimum sealing travel (s1) being greater than the second minimum sealing travel (s2);
and the brake master cylinder (10) having a second pressure chamber (22) which is delimited by the second piston component (20) and on which at least one second reservoir attachment opening (24) is configured which can be sealed by means of the second piston component (20); and
a valve (32) of the brake system, by means of which valve (32), a brake circuit attachment opening (30) which is configured on the second pressure chamber (22) in addition to the at least one second reservoir attachment opening (24) can be closed;
**characterized in that**
the valve (32) is configured as a normally open valve (32), and the brake master cylinder (10) can be controlled into a first operating mode by way of controlling of the valve (32) into its closed state, in which first operating mode a first maximum of a counter-force which counteracts the adjustment of the first piston component (18) along the first minimum sealing travel (s1) is smaller than a second maximum of a counter-force which counteracts the adjustment of the second piston component (20) along the second minimum sealing travel (s2), whereas the brake master cylinder (10) can be controlled into a second operating mode by way of controlling of the valve (32) into its at least partially open state, in which second operating mode the first maximum of the counter-force which counteracts the adjustment of the first piston component (18) along the first minimum sealing travel (s1) is greater than or equal to the second maximum of the counter-force which counteracts the adjustment of the second piston component (20) along the second minimum sealing travel (s2).

6. Brake system according to Claim 5, the brake system comprising a brake circuit (40) which can be decoupled from the brake master cylinder (10) by way of controlling of the valve (32) into its closed state.

7. Method for operating a brake system having a brake master cylinder (10) with a first pressure chamber (12) with at least one first reservoir attachment opening (14) which is sealed in the case of an adjustment of a first piston component (18) of the brake master cylinder (10) out of its first starting position by a first minimum sealing travel (s1), and which is additionally sealed in the case of an adjustment of a second piston component (20) of the brake master cylinder (10) out of its second starting position by a second minimum sealing travel (s2) which is smaller than the first minimum sealing travel (s1), and with a second pressure chamber (22) which is delimited by the second piston component (20) and on which at least one second reservoir attachment opening (24) which can be sealed by means of the second piston component (20) is configured, having the following steps:
fixing of an idle travel of the first pressure chamber (12) to a first length which corresponds to the first minimum sealing travel (s1) by way of controlling of a normally open valve (32), by means of which a brake circuit attachment opening (30) which is configured on the second pressure chamber (22) in addition to the at least one second reservoir attachment opening (24) can be closed, into its closed state, as a result of which the brake master cylinder (10) is controlled into a first mode, in which a simultaneous adjustment of the second piston component (20) by the second minimum sealing travel (s2) is suppressed (S1) despite a brake force which is exerted on at least the first piston component (18); and
fixing of the idle travel of the first pressure chamber (12) to a second length which corresponds to the second minimum sealing travel (s2) and is not equal to the first length by way of controlling of the normally open valve (32) into its at least partially open state, as a result of which the brake master cylinder (10) is controlled into a second mode, in which the second piston component (20) is simultaneously adjusted (S2) with the first piston component (18) on account of the brake force which is exerted at least on the first piston component (18).

## Revendications

1. Maître-cylindre de frein (10) pour un système de frein d'un véhicule, comprenant :
une première chambre de pression (12) au niveau de laquelle est réalisée au moins une première ouverture de raccordement à un réservoir (14) ;
un premier composant de piston (18) et un deuxième composant de piston (20) ;
l'au moins une première ouverture de raccordement à un réservoir (14) de la première chambre de pression (12) pouvant être étanchéifiée au moyen du premier composant de piston (18) déplacé au moins d'une première course d'étanchéité minimale (s1) depuis sa première position de départ,
l'au moins une première ouverture de raccordement à un réservoir (14) de la première chambre de pression (12) pouvant en outre être étanchéifiée au moyen du deuxième composant de piston (20) déplacé au moins d'une deuxième course d'étanchéité minimale (s2) à partir de sa deuxième position de départ, la première course d'étanchéité minimale (s1) étant plus grande que la deuxième course d'étanchéité minimale (s2),
le maître-cylindre de frein (10) présentant une deuxième chambre de pression (22) limitée par le deuxième composant de piston (20), au niveau de laquelle est réalisée au moins une deuxième ouverture de raccordement à un réservoir (24) qui peut être étanchéifiée au moyen du deuxième composant de piston (20),
et une ouverture de raccordement à un circuit de frein (30) réalisée en plus de l'au moins une deuxième ouverture de raccordement à un réservoir (24) au niveau de la deuxième chambre de pression (22) pouvant être fermée au moyen d'une soupape (32) du maître-cylindre de frein (10),
**caractérisé en ce que**
la soupape (32) est réalisée sous forme de soupape (32) ouverte en l'absence de courant et le maître-cylindre de frein (10) peut être commandé par une commande de la soupape (32) dans son état fermé dans un premier mode de fonctionnement dans lequel un premier maximum d'une force conjuguée s'opposant au déplacement du premier composant de piston (18) le long de la première course d'étanchéité minimale (s1) est inférieur à un deuxième maximum d'une force conjuguée s'opposant au déplacement du deuxième composant de piston (20) le long de la deuxième course d'étanchéité minimale (s2), tandis que le maître-cylindre de frein (10) peut être commandé par une commande de la soupape (32) dans son état au moins partiellement ouvert dans un deuxième mode de fonctionnement dans lequel le premier maximum de la force conjuguée s'opposant au déplacement du premier composant de piston (18) le long de la première course d'étanchéité minimale (s1) est supérieur ou égal au deuxième maximum de la force conjuguée s'opposant au déplacement du deuxième composant de piston (20) le long de la deuxième course d'étanchéité minimale (s2).

2. Maître-cylindre de frein (10) selon la revendication 1, dans lequel l'au moins une deuxième ouverture de raccordement à un réservoir (24) de la deuxième chambre de pression (22) peut être étanchéifiée au moyen du deuxième composant de piston (20) déplacé d'une course de piston inférieure à la deuxième course d'étanchéité minimale (s2) à partir de sa deuxième position de départ.

3. Maître-cylindre de frein (10) selon la revendication 1 ou 2, dans lequel un premier ressort de rappel (26) s'appuyant contre le premier composant de piston (18) dans la première chambre de pression (12) présente une première constante de ressort (c1), et un deuxième ressort de rappel (28) s'appuyant contre le deuxième composant de piston (20) dans la deuxième chambre de pression (22) présente une deuxième constante de ressort (c2) inférieure à la première constante de ressort (c1).

4. Maître-cylindre de frein (10) selon l'une quelconque des revendications précédentes, dans lequel la première chambre de pression (12) est réalisée au moins en partie sous forme de cavité intérieure du deuxième composant de piston (20) à l'intérieur de laquelle le premier composant de piston (18) peut être déplacé au moins en partie.

5. Système de frein pour un véhicule, comprenant :
un maître-cylindre de frein (10) comprenant :
- une première chambre de pression (12) au niveau de laquelle est réalisée au moins une première ouverture de raccordement à un réservoir (14) ;
- un premier composant de piston (18) ; et
- un deuxième composant de piston (20) ;
l'au moins une première ouverture de raccordement à un réservoir (14) de la première chambre de pression (12) pouvant être étanchéifiée au moyen du premier composant de piston (18) déplacé au moins d'une première course d'étanchéité minimale (s1) à partir de sa première position de départ, et l'au moins une première ouverture de raccordement à un réservoir (14) de la première chambre de pression (12) pouvant être étanchéifiée en outre au moyen du deuxième composant de piston (20) déplacé au moins d'une deuxième course d'étanchéité minimale (s2) à partir de sa deuxième position de départ, la première course d'étanchéité minimale (s1) étant supérieure à la deuxième course d'étanchéité minimale (s2) ;
et le maître-cylindre de frein (10) présentant une deuxième chambre de pression (22) limitée par le deuxième composant de piston (20), au niveau de laquelle est réalisée au moins une deuxième ouverture de raccordement à un réservoir (24) qui peut être étanchéifiée au moyen du deuxième composant de piston (20) ; et
une soupape (32) du système de frein, au moyen de laquelle une ouverture de raccordement à un circuit de frein (30), réalisée en plus de l'au moins une deuxième ouverture de raccordement à un réservoir (24), au niveau de la deuxième chambre de pression (22) peut être fermée ;
**caractérisé en ce que**
la soupape (32) est réalisée sous forme de soupape (32) ouverte en l'absence de courant et le maître-cylindre de frein (10) peut être commandé par une commande de la soupape (32) dans son état fermé dans un premier mode de fonctionnement dans lequel un premier maximum d'une force conjuguée s'opposant au déplacement du premier composant de piston (18) le long de la première course d'étanchéité minimale (s1) est inférieur à un deuxième maximum d'une force conjuguée s'opposant au déplacement du deuxième composant de piston (20) le long de la deuxième course d'étanchéité minimale (s2), tandis que le maître-cylindre de frein (10) peut être commandé par une commande de la soupape (32) dans son état au moins en partie ouvert dans un deuxième mode de fonctionnement dans lequel le premier maximum de la force conjuguée s'opposant au déplacement du premier composant de piston (18) le long de la première course d'étanchéité minimale (s1) est supérieur ou égal au deuxième maximum de la force conjuguée s'opposant au déplacement du deuxième composant de piston (20) le long de la deuxième course d'étanchéité minimale (s2).

6. Système de frein selon la revendication 5, dans lequel le système de frein comprend un circuit de frein (40) qui peut être désaccouplé du maître-cylindre de frein (10) par commande de la soupape (32) dans son état fermé.

7. Procédé pour faire fonctionner un système de frein comprenant un maître-cylindre de frein (10) comprenant une première chambre de pression (12) avec au moins une première ouverture de raccordement à un réservoir (14) qui peut être étanchéifiée lors du déplacement d'un premier composant de piston (18) du maître-cylindre de frein (10) d'une première course d'étanchéité minimale (s1) à partir de sa première position de départ et qui est étanchéifiée en outre lors d'un déplacement d'un deuxième composant de piston (20) du maître-cylindre de frein (10) à partir de sa deuxième position de départ d'une deuxième course d'étanchéité minimale (s2) inférieure à la première course d'étanchéité minimale (s1), et comprenant une deuxième chambre de pression (22) limitée par le deuxième composant de piston (20), au niveau de laquelle est réalisée au moins une deuxième ouverture de raccordement à un réservoir (24) pouvant être étanchéifiée au moyen du deuxième composant de piston (20), comprenant les étapes suivantes :
établissement d'une course à vide de la première chambre de pression (12) à une première longueur correspondant à la première course d'étanchéité minimale (s1) par commande dans son état fermé, d'une soupape (32) ouverte en l'absence de courant, au moyen de laquelle une ouverture de raccordement à un circuit de frein (30) réalisée en plus de l'au moins une deuxième ouverture de raccordement à un réservoir (24) au niveau de la deuxième chambre de pression (22) peut être fermée, de sorte que le maître-cylindre de frein (10) soit commandé dans un premier mode dans lequel un déplacement conjoint du deuxième composant de piston (20) de la deuxième course d'étanchéité minimale (s2) soit supprimé (S1) malgré une force de freinage exercée sur au moins le premier composant de piston (18) ; et
établissement de la course à vide de la première chambre de pression (12) à une deuxième longueur correspondant à la deuxième course d'étanchéité minimale (s2) différente de la première longueur par commande de la soupape (32) ouverte en l'absence de courant dans son état au moins partiellement ouvert, de sorte que le maître-cylindre de frein (10) soit commandé dans un deuxième mode dans lequel le deuxième composant de piston (20) est déplacé conjointement (S2) au premier composant de piston (18) du fait de la force de freinage exercée au moins sur le premier composant de piston (18).
